# EUROPEAN PATENT APPLICATION

(11) **EP 4 550 942 A1**
(43) Date of publication of application: **07.05.2025**
(21) Application number: 23830504.9
(22) Date of filing: 30.06.2023
(51) Int. Cl.: H05H 9/00, H05H 7/22, G01N 23/02

(54) **X-BAND SMALL-FOCUS ACCELERATOR USED FOR NONDESTRUCTIVE TESTING**

(30) Priority: 01.07.2022 CN 202210775367
(71) Applicant: NUCTECH COMPANY LIMITED, Beijing 100084 (CN); Tsinghua University, Haidian District, Beijing 100084 (CN); Granpect Company Limited, Beijing 100083 (CN)
(72) Inventor: LIU, Yaohong, Beijing 100084 (CN); CHEN, Huaibi, Beijing 100084 (CN); JIA, Wei, Beijing 100084 (CN); ZHA, Hao, Beijing 100084 (CN); HE, Yu, Beijing 100084 (CN); LI, Jian, Beijing 100084 (CN); GUAN, Weiqiang, Beijing 100084 (CN); JIN, Ming, Beijing 100084 (CN); YE, Qing, Beijing 100084 (CN); LI, Junjiang, Beijing 100084 (CN); XU, Yan, Beijing 100084 (CN)
(74) Representative: Gunzelmann, Rainer
(86) International application number: PCT/CN2023/104644
(87) International publication number: WO 2024/002341

(57) **Abstract**

The present disclosure provides an X-band small-focus accelerator for non-destructive testing, including: a magnetron used to generate microwaves; an accelerating tube used to accelerate electrons, where the accelerating tube is an X-band accelerating tube; a microwave system connected between the magnetron and the accelerating tube, and used to feed the microwaves generated by the magnetron into the accelerating tube; an electron gun connected to the accelerating tube, and used to emit an electron beam into the accelerating tube; and an electron gun power supply used to supply power to the electron gun, where the accelerating tube, the microwave system, the magnetron and the electron gun power supply are arranged in sequence in a front-rear direction of the accelerator to determine a length of the accelerator. **In** the present disclosure, the use of the X-band accelerating tube may help achieve a small focus easier and an image resolution is high. Furthermore, the accelerating tube, the microwave system, the magnetron and the electron gun power supply required by the accelerator are arranged in sequence to determine the length of the accelerator, so that an internal space of the accelerator may be fully utilized, and an overall dimension of the accelerator may be reduced.

## Description

This application claims the benefit of priority to Chinese Patent Application No. 202210775367.5, filed on July 1, 2022, which is incorporated herein by reference in its entirety.

### TECHNICAL FIELD

The present disclosure relates to a field of electron linear accelerator technology, and in particular to an X-band small-focus accelerator for non-destructive testing.

### BACKGROUND

An X-ray source refers to a device that generates X-rays, usually including an X-ray tube (X-ray machine) and an electron linear accelerator. Different X-ray sources operate in different principles, and may generally be divided according to the following energy ranges. X-rays with energy below 500 keV (the energy here refers to an energy of an electron beam before targeting) mainly use an X-ray tube as the X-ray source. A focal size of the X-ray tube may reach below 0.5 mm, which is conductive to improving a spatial resolution of radiation imaging. However, due to a low energy and a weak radiation penetration, it may only be used to detect a thin work-piece. X-rays with energy above 1 MeV mainly use an electron linear accelerator as the X-ray source. The electron linear accelerator may generate high-energy X-rays having strong penetrating power and may be used to detect a large work-piece.

At present, most electron linear accelerators use S-band accelerating tubes. Related microwave devices such as magnetrons, four-port circulators, waveguides, phase shifters and other devices are mature in technology and reasonable in price, and have been widely used in the market. Taking an existing S-band 2MeV accelerator for non-destructive testing as an example, the accelerator has a focal size of about 1.5 mm to 2 mm and a spatial resolution of about 1.5 LP/mm to 3 LP/mm, which may not meet a detection of high-precision machined parts. Moreover, the accelerator has a large weight and a large size. In many application scenarios such as industrial CT and vehicle-mounted security inspection device, the accelerator head is required to have a small weight and a small structure, and such accelerator may not meet more market demands.

In summary, in the existing X-ray sources, the X-ray tube has a small focus and a high image resolution but a low energy, while the S-band accelerator has a large focus, a low image resolution, a large weight and a large head size, which may not meet the needs of non-destructive testing in special fields. Therefore, there is a need to provide an electron linear accelerating device with a small focus, a small weight and a compact structure to meet the market demand in the field.

### SUMMARY

In an aspect, the present disclosure provides an X-band small-focus accelerator for non-destructive testing, including: a magnetron configured to generate microwaves; an accelerating tube configured to accelerate electrons, where the accelerating tube is an X-band accelerating tube; a microwave system connected between the magnetron and the accelerating tube and configured to feed the microwaves generated by the magnetron into the accelerating tube; an electron gun connected to the accelerating tube and configured to emit an electron beam into the accelerating tube; and an electron gun power supply configured to supply power to the electron gun, where the accelerating tube, the microwave system, the magnetron and the electron gun power supply are arranged in sequence in a front-rear direction of the accelerator to determine a length of the accelerator.

According to embodiments of the present disclosure, the microwave system includes a waveguide configured to transmit microwave power and a circulator configured to isolate microwave power fed back to the magnetron.

According to embodiments of the present disclosure, the waveguide includes a gas-filled straight waveguide and a gas-filled bending waveguide, the gas-filled straight waveguide is connected between the magnetron and the circulator, and the gas-filled bending waveguide is connected between the circulator and the accelerating tube.

According to embodiments of the present disclosure, the circulator includes a four-port circulator arranged in the front-rear direction of the accelerator.

According to embodiments of the present disclosure, the accelerator further includes a solid-state switch component configured to convert an input direct-current high voltage into a pulse high voltage, the solid-state switch component is connected to the magnetron, and the magnetron is configured to receive the pulse high voltage of the solid-state switch component to generate the microwaves.

According to embodiments of the present disclosure, when the accelerator is installed, the solid-state switch component is located at a bottom of the magnetron.

According to embodiments of the present disclosure, the accelerator further includes an external collimator and an external collimator control unit, and when the accelerator is installed, the external collimator control unit is located at a bottom of the magnetron.

According to embodiments of the present disclosure, the accelerator further includes a magnetic pulse transformer connected to the solid-state switch component and the magnetron, and the magnetic pulse transformer, the solid-state switch component and the external collimator control unit are arranged in sequence in a left-right direction of the accelerator to determine a width of the accelerator.

According to embodiments of the present disclosure, the accelerator further includes a head rack having a frame structure, the accelerating tube, the microwave system, the magnetron and the electron gun power supply are arranged inside the frame structure and distributed in a length direction of the frame structure, and the magnetic pulse transformer, the solid-state switch component and the external collimator control unit are arranged inside the frame structure and distributed in a width direction of the frame structure.

According to embodiments of the present disclosure, the electron gun power supply includes an electron gun low-voltage power supply and an electron gun high-voltage power supply.

In the X-band small-focus accelerator for non-destructive testing according to embodiments of the present disclosure, the accelerating tube is an X-band accelerating tube, which may achieve a small focus easier, so that the image resolution is high. In addition, the X-band accelerating tube has a smaller volume and weight, and the accelerating tube, the microwave system, the magnetron and the electron gun power supply are closely arranged in the front-rear direction of the accelerator, so that the accelerator may have a more compact internal structure and a smaller overall dimension, thereby meeting non-destructive testing requirements of a large high-precision machined part in a case of limited space.

### BRIEF DESCRIPTION OF THE DRAWINGS

With following descriptions of the present disclosure with reference to the accompanying drawings, other obj ectives and advantages of the present disclosure may be clear and the present disclosure may be understood comprehensively.
FIG. 1 shows a schematic diagram of a three-dimensional structure of an X-band small-focus accelerator for non-destructive testing according to an embodiment of the present disclosure.
FIG. 2 shows a schematic diagram of a three-dimensional structure of a X-band small-focus accelerator for non-destructive testing from another perspective according to an embodiment of the present disclosure, in which an external collimator control unit is hidden.
FIG. 3 shows a schematic front view of an X-band small-focus accelerator for non-destructive testing according to an embodiment of the present disclosure.
FIG. 4 shows a schematic top view of an X-band small-focus accelerator for non-destructive testing according to an embodiment of the present disclosure.
FIG. 5 shows a schematic rear view of an X-band small-focus accelerator for non-destructive testing according to an embodiment of the present disclosure.
FIG. 6 shows a schematic left view of an X-band small-focus accelerator for non-destructive testing according to an embodiment of the present disclosure.
FIG. 7 shows a schematic right view of an X-band small-focus accelerator for non-destructive testing according to an embodiment of the present disclosure.
FIG. 8 shows a schematic diagram of a three-dimensional structure of a magnetron and a microwave system according to an embodiment of the present disclosure.
FIG. 9 shows a schematic front view of a magnetron and a microwave system according to an embodiment of the present disclosure.

In the accompanying drawings, 100 represents an accelerator, 110 represents a magnetron, 120 represents an accelerating tube, 130 represents a microwave system, 131 represents a circulator, 132 represents a gas-filled straight waveguide, 133 represents a gas-filled bending waveguide, 134 represents a large water-cooled load, 135 represents a small load, 140 represents an electron gun power supply, 150 represents a solid-state switch component, 160 represents an external collimator, 161 represents an external collimator control unit, 170 represents a magnetic pulse transformer, and 180 represents a head rack.

It should be noted that for the sake of clarity, in the accompanying drawings used to describe embodiments of the present disclosure, sizes of structures or regions may be enlarged or reduced, that is, these accompanying drawings are not drawn according to actual scale.

### DETAILED DESCRIPTION OF EMBODIMENTS

In order to make objectives, technical solutions and advantages of embodiments of the present disclosure clearer, technical solutions of embodiments of the present disclosure will be clearly and completely described below with reference to the accompanying drawings. Clearly, the described embodiments are merely some embodiments rather than all embodiments of the present disclosure. Based on the described embodiments of the present disclosure, all additional embodiments obtained by those ordinary skilled in the art without carrying out inventive effort fall within the scope of protection of the present disclosure.

Unless otherwise defined, the technical or scientific terms used in the present disclosure should have the usual meanings understood by those skilled in the art. The words "first", "second" and the like used in the present disclosure do not indicate any order, quantity or importance, but are merely used to distinguish different composition parts. The word "including", "containing" or the like means that an element or object preceding that word includes elements or objects listed after that word and their equivalents, but does not exclude other elements or objects.

Herein, unless otherwise specified, directional terms such as "upper", "lower", "left", "right", "inside", "outside", etc. are used to indicate orientations or positional relationships shown based on the accompanying drawings, which is intended to facilitate the descriptions of the present disclosure and not to indicate or imply that the device, element or component referred to must have a specific orientation or must be constructed or operated in a specific orientation. It should be understood that when an absolute position of a described object changes, the relative positional relationships indicated by those terms may also change accordingly. Therefore, those directional terms may not be understood as limitations to the present disclosure.

An embodiment of the present disclosure provides an X-band small-focus accelerator for non-destructive testing, including: a magnetron used to generate microwaves; an accelerating tube used to accelerate electrons, where the accelerating tube is an X-band accelerating tube; a microwave system connected between the magnetron and the accelerating tube, where the microwave system is used to feed the microwaves generated by the magnetron into the accelerating tube; an electron gun connected to the accelerating tube and used to emit an electron beam into the accelerating tube; and an electron gun power supply used to supply power to the electron gun; where the accelerating tube, the microwave system, the magnetron and the electron gun power supply are arranged in sequence in a front-rear direction of the accelerator to determine a length of the accelerator. In embodiments of the present disclosure, by using the X-band accelerating tube, it is easy to achieve a small focus and a high image resolution. Since the X-band accelerating tube has a smaller volume than the S-band accelerating tube, the volume of the accelerating tube and its surrounding shielding may be reduced, and a weight of the accelerator may be reduced. In addition, the accelerating tube, the microwave system, the magnetron and the electron gun power supply required by the accelerator are arranged in sequence to define the length of the accelerator, so that an internal space of the accelerator may be fully utilized and an overall dimension of the accelerator may be reduced, thereby providing an electron linear acceleration device with a small focus, a small weight and a compact structure to meet application requirements in fields such as security inspection and non-destructive testing using an accelerator as a radiation source.

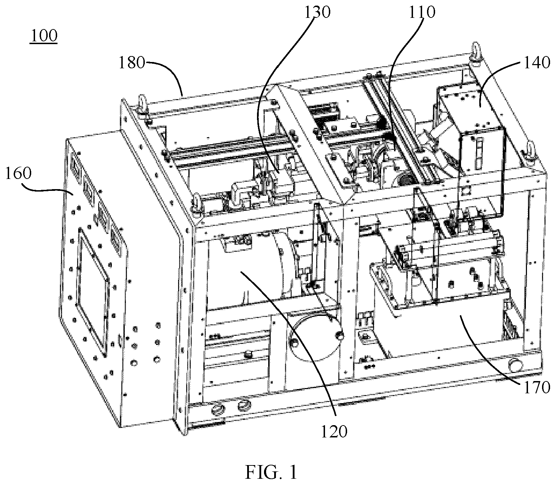

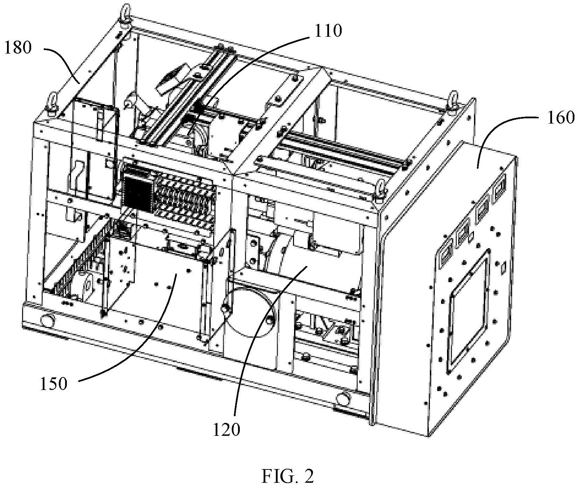

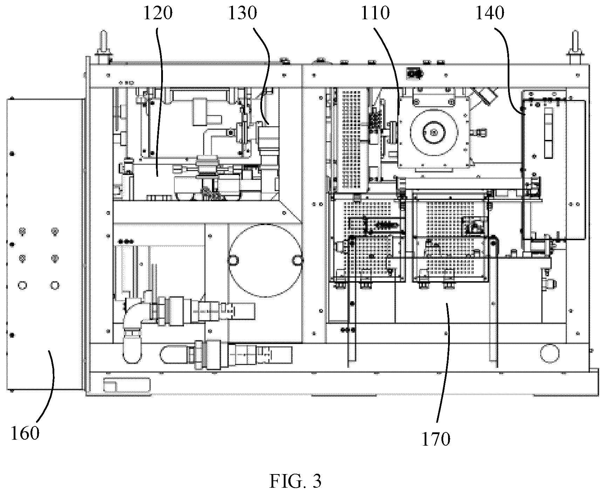

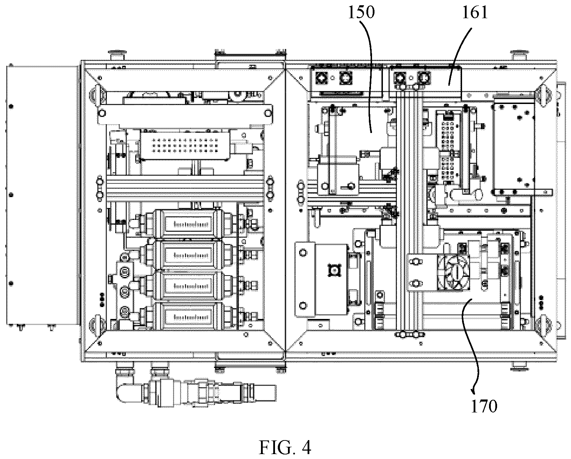

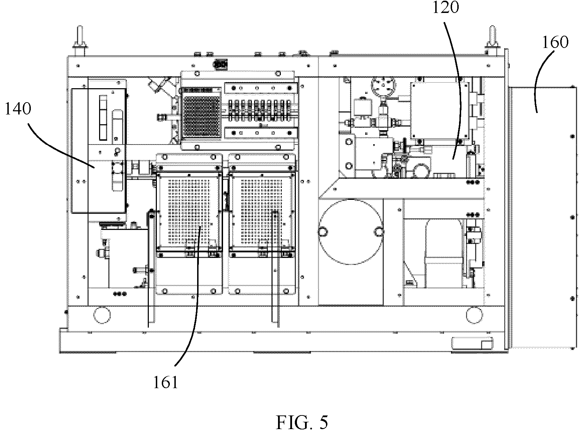

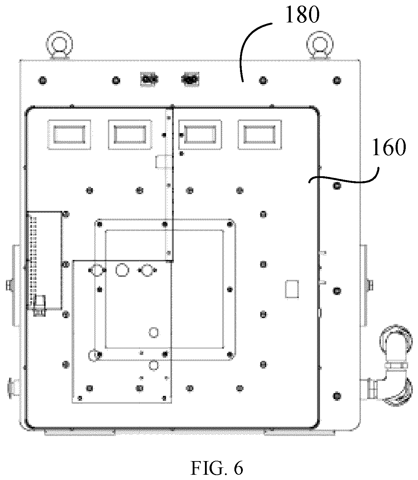

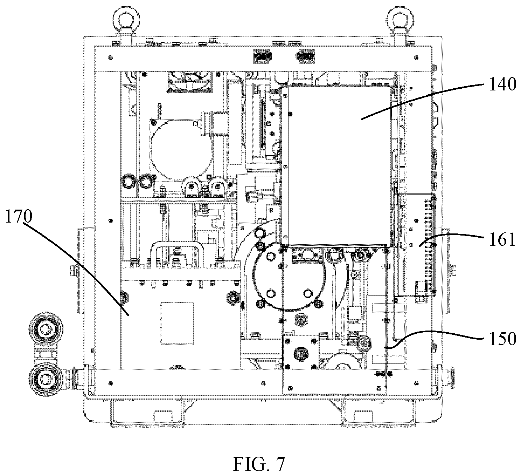

FIG. 1 shows a schematic diagram of a three-dimensional structure of an X-band small-focus accelerator for non-destructive testing according to an embodiment of the present disclosure. FIG. 2 shows a schematic diagram of the three-dimensional structure of the X-band small-focus accelerator for non-destructive testing from another perspective according to an embodiment of the present disclosure, in which an external collimator control unit is hidden. FIG. 3 shows a schematic front view of an X-band small-focus accelerator for non-destructive testing according to an embodiment of the present disclosure. FIG. 4 shows a schematic top view of an X-band small-focus accelerator for non-destructive testing according to an embodiment of the present disclosure. FIG. 5 shows a schematic rear view of an X-band small-focus accelerator for non-destructive testing according to an embodiment of the present disclosure. FIG. 6 shows a schematic left view of an X-band small-focus accelerator for non-destructive testing according to an embodiment of the present disclosure. FIG. 7 shows a schematic right view of an X-band small-focus accelerator for non-destructive testing according to an embodiment of the present disclosure.

As shown in FIG. 1 to FIG. 7, an X-band small-focus accelerator 100 for non-destructive testing according to an embodiment of the present disclosure may include at least a magnetron 110, an accelerating tube 120, a microwave system 130, an electron gun, and an electron gun power supply 140.

The magnetron 110 is used as a microwave source for receiving high voltage pulses to generate microwaves and transmitting the microwaves to the accelerating tube 120.

The accelerating tube 120 has a plurality of accelerating cavities. An electron beam may be accelerated and focused when passing through the accelerating cavities, so as to achieve an electron acceleration. In embodiments of the present disclosure, the accelerating tube 120 is an X-band accelerating tube. Compared with existing S-band accelerating tubes, the X-band accelerating tube has a smaller volume in a case of achieving the same electron beam energy because a microwave frequency of X-band is higher. Accordingly, a shielding around the accelerating tube 120 has a smaller volume, and a weight of the accelerating tube 120 is reduced. Moreover, due to a lower electron capture rate of the accelerating cavity of the X-band accelerating tube compared to that of the S-band accelerating tube, in order to achieve the same electron beam energy, the X-band accelerating tube needs to be provided with more accelerating cavities, and the electron beam may be accelerated and focused when passing through each cavity. Since the number of accelerating cavities of the X-band accelerating tube is greater than that of the S-band accelerating tube, a design flexibility of the X-band accelerating tube in electron bunching design is significantly better than that of the S-band accelerating tube, and it is easier to achieve a small focus.

The microwave system 130 is connected between the magnetron 110 and the accelerating tube 120. The microwave system 130 is used to feed the microwaves generated by the magnetron 110 into the accelerating tube 120, that is, the microwave system 130 is used to transmit a microwave power generated by the magnetron 110 to the accelerating tube 120.

The electron gun is connected to the accelerating tube 120 and is used to emit an electron beam into the accelerating tube 120, so that the electron beam may be accelerated and focused by using the accelerating tube 120.

The electron gun power supply 140 is electrically connected to the electron gun and is used to supply power to the electron gun.

In embodiments of the present disclosure, the accelerating tube 120, the microwave system 130, the magnetron 110 and the electron gun power supply 140 are arranged in sequence in a front-rear direction of the accelerator 100 to determine a length of the accelerator 100. It should be noted that herein, the front-rear direction of the accelerator 100 is parallel to a ray emission direction of the accelerator 100, and a left-right direction of the accelerator 100 is perpendicular to the ray emission direction of the accelerator 100, which will not be repeated later.

In embodiments of the present disclosure, the accelerating tube 120 is an X-band accelerating tube 120, which may easier achieve a small focus and a higher image resolution. In addition, since the volume of the X-band accelerating tube 120 is smaller than that of the S-band accelerating tube, the volume and weight of the accelerating tube 120 and its shielding may be reduced accordingly. Moreover, the accelerating tube 120, the microwave system 130, the magnetron 110 and the electron gun power supply 140 are closely arranged in the front-rear direction of the accelerator 100 to determine the length of the accelerator 120, so that the overall dimension of the accelerator 100 may be minimized. Through the above design, embodiments of the present disclosure may provide an X-band electron linear accelerator with a focal size of no more than 0.5 mm, a small weight and a compact structure that may generate electron energy of more than 1.95 MeV, which may meet the non-destructive testing needs of a large high-precision machined part in a case of limited space.

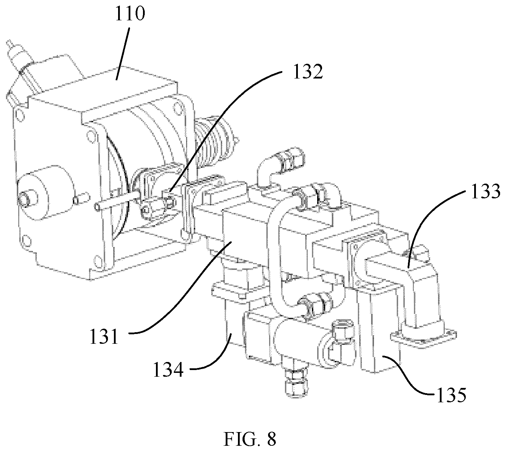

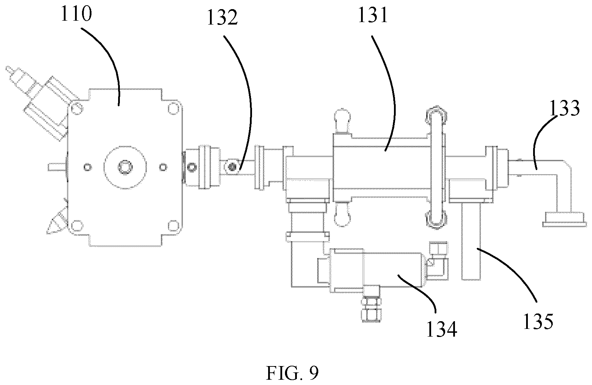

FIG. 8 shows a schematic diagram of a three-dimensional structure of a magnetron and a microwave system according to an embodiment of the present disclosure. FIG. 9 shows a schematic front view of a magnetron and a microwave system according to an embodiment of the present disclosure.

As shown in FIG. 8 and FIG. 9, according to embodiments of the present disclosure, the microwave system 130 includes a waveguide and a circulator 131. The waveguide is used to transmit the microwave power, and the circulator 131 is used to isolate the microwave power fed back to the magnetron 110. The waveguide connects the magnetron 110 and the accelerating tube 120, and is used to transmit the microwave power generated by the magnetron 110 to the accelerating tube 120. The circulator 131 is arranged between the magnetron 110 and the accelerating tube 120. The circulator 131 is connected to the waveguide to form a microwave power transmission channel. Under an isolation effect of the circulator 131, the microwave power may be prevented from being fed back to the magnetron 110.

According to embodiments of the present disclosure, the waveguide includes a gas-filled straight waveguide 132 and a gas-filled bending waveguide 133. The gas-filled straight waveguide 132 is connected between the magnetron 110 and the circulator 131, and the gas-filled bending waveguide 133 is connected between the circulator 131 and the accelerating tube 120. In such embodiments, the magnetron 110 serves as a microwave power source, and may be an X-band coaxial magnetron. The microwave power generated by the magnetron 110 is fed into the accelerating tube 120 through the waveguide and the circulator 131. Specifically, the waveguide only includes a gas-filled straight waveguide 132 and a gas-filled bending waveguide 133. The gas-filled straight waveguide 132 connects the magnetron 110 and the circulator 131, and the gas-filled bending waveguide 133 connects the circulator 131 and the accelerating tube 120. That is, the magnetron 110, the gas-filled straight waveguide 132, the circulator 131 and the gas-filled bending waveguide 133 are arranged in sequence in the front-rear direction of the accelerator 100. Therefore, it is possible to minimize a space occupied by the waveguide without affecting the microwave transmission between the magnetron 110, the circulator 131 and the accelerating tube 120, which may help reduce the dimension of the accelerator 100.

According to embodiments of the present disclosure, the circulator 131 includes a four-port circulator, which is arranged in the front-rear direction of the accelerator 100. The four-port circulator mainly plays the role of directional power transmission and isolation protection in the accelerator 100. In such embodiments, the microwave power output by the magnetron 110 is fed into port 1 of the four-port circulator and directionally transmitted to the accelerating tube 120 at port 2, and the microwave reflected back from the accelerating tube 120 is directionally transmitted to a large water-cooled load 134 at port 3 for absorption. The microwave power reflected by the large water-cooled load 134 may be absorbed by a small load 135 at port 4. The microwave power reflected by port 4 is very low, and may not affect a normal operation even if it returns to the magnetron 110 at port 1, so that the magnetron 110 may be protected. The four-port circulator is a differential phase-shift circulator 131, which consists of three parts, namely a magic T, a π/2 differential phase shifter and a 3dB narrow-side crack bridge. In embodiments of the present disclosure, because the four-port circulator needs to isolate the microwave power fed back to the magnetron 110, a connecting portion between the magic T, the π/2 differential phase shifter and the bridge is compressed as much as possible while ensuring a certain degree of isolation, thereby achieving a miniaturized four-port circulator. Specifically, a length of the four-port circulator is reduced by about 1/3 compared with the original length while ensuring a 30 dB isolation, so that an overall length of the accelerator 100 may be reduced, and the accelerator 100 may be miniaturized.

It may be understood that in other optional embodiments, the circulator 131 may not be limited to a four-port circulator. For example, the circulator 131 may also be a three-port circulator.

According to embodiments of the present disclosure, the accelerator 100 further includes a gas filling system for supplying gas to the waveguide. For example, the gas filling system may include a sulfur hexafluoride gas cylinder, a flow meter, a pipeline, a valve, etc., and the gas filling system may be placed in a gap inside the accelerator 100.

According to embodiments of the present disclosure, the accelerator 100 further includes a modulator and a solid-state switch component 150. The solid-state switch component 150 includes eight charging and discharging modules, which are used to convert an input direct-current high voltage into a pulsed high voltage. The solid-state switch component 150 is connected to the magnetron 110. The magnetron 110 may receive the pulsed high voltage of the solid-state switch component 150 to generate microwaves.

The modulator (not shown) may be a lightweight solid-state modulator, which is mainly used to provide a high-voltage power supply, a low-voltage power supply and a timing control required by the accelerator 100. The solid-state switch component 150 is arranged inside the accelerator 100. Specifically, when the accelerator 100 is installed, the solid-state switch component 150 is located at a bottom of the magnetron 110, and is used to form a pulsed high voltage that is provided to the magnetron 110 to generate microwaves. Specifically, the solid-state switch component 150 is a device that converts a direct-current high voltage into a pulse high voltage based on a principle of MARX generator. When a trigger signal has not yet arrived, the direct-current high voltage charges each energy storage capacitor in parallel. When the trigger signal is received, all the energy storage capacitors instantly discharge to the load in series.

In embodiments of the present disclosure, a structure of the solid-state switch component 150 may be compressed because the magnetron 110 is an X-band magnetron and an operating voltage of the X-band magnetron is lower than that of the S-band magnetron. A common solid-state switch component 150 includes a plurality of charging and discharging modules. In such embodiments, the number of charging and discharging modules may be appropriately reduced while meeting the operating voltage requirements of the X-band magnetron. Accordingly, an overall dimension of the solid-state switch component 150 may also be reduced, that is, a space occupied by the solid-state switch component 150 may be reduced, so that the internal structure of the accelerator 100 is more compact.

According to embodiments of the present disclosure, the accelerator 100 further includes an external collimator 160 and an external collimator control unit 161. The external collimator 160 is arranged on a side of the accelerator 100 where the rays are emitted, and is located outside the accelerator 100. The external collimator 160 is used to collimate the emitted rays of the accelerator 100. It may be understood that providing the external collimator 160 is equivalent to extending the length of the accelerator 100. In order to prevent the accelerator 100 from being too long, the external collimator 160 is separated from the external collimator control unit 161. Specifically, the external collimator control unit 161 is arranged inside the accelerator 100 and electrically connected to the external collimator 160 to control the external collimator 160 to adjust an irradiation field. When the accelerator 100 is installed, the external collimator control unit 161 is located at a bottom of the magnetron 110, which may minimize an impact on the length of the accelerator 100.

According to embodiments of the present disclosure, the accelerator 100 further includes a magnetic pulse transformer 170, which connects the solid-state switch component 150 and the magnetron 110. The high-voltage pulse generated by the solid-state switch component 150 may be converted into a suitable pulse by the magnetic pulse transformer 170 and then supplied to the magnetron 110 serving as a microwave source. After receiving the high voltage pulse, the magnetron 110 outputs microwaves in the form of pulses, and the microwaves are transmitted to the accelerating tube 120 through the microwave system 130. Because the magnetic pulse transformer 170 and the solid-state switch component 150 have relatively large volume, if the magnetic pulse transformer 170 and the solid-state switch component 150 are arranged in the front-rear direction of the accelerator 100 according to an existing design, the accelerator 100 may have a too large length and a too large overall dimension. Therefore, in embodiments of the present disclosure, the magnetic pulse transformer 170 and the solid-state switch component 150 are arranged in the left-right direction of the accelerator 100. Since the accelerating tube 120 and its shielding have a particular width, an overall width of the accelerator 100 may not increase too much even if the magnetic pulse transformer 170 and the solid-state switch component 150 are arranged side by side. As shown in FIG. 1, FIG. 2, FIG. 4 and FIG. 7, the magnetic pulse transformer 170, the solid-state switch component 150 and the external collimator control unit 161 are all located below the magnetron 110. The magnetic pulse transformer 170, the solid-state switch component 150 and the external collimator control unit 161 are arranged in sequence in the left-right direction of the accelerator 100 to determine the width of the accelerator 100. In this case, the accelerating tube 120 and its shielding may be normally accommodated inside the accelerator 100 without causing too large length and width of the accelerator 100.

According to embodiments of the present disclosure, the electron gun power supply 140 includes an electron gun low-voltage power supply and an electron gun high-voltage power supply. The electron gun is a core component for generating electrons, which is welded together with a tube body of the accelerating tube 120 and is located in a vacuum environment. In operation, it is needed to heat a gun filament, and a gun cathode emits electrons to form an electron cloud after being heated. When emitting the beam, it is needed to apply a high voltage to the electron gun, so that the electrons are accelerated and injected into a first accelerating cavity of the accelerating tube 120. At present, in order to ensure a normal operation of the electron gun, a common accelerator is provided with a gun high-voltage power supply, a high-voltage line, a pulse transformer and an electron gun filament power supply, these supporting components are installed at scattered positions, and the space in the accelerator 100 is wasted. In the accelerator 100 of embodiments of the present disclosure, low voltage, high voltage and boost functions of the electron gun are integrated into one power supply to form the electron gun power supply 140, which saves a lot of space and makes the structure of the accelerator 100 more compact. Furthermore, as the integrated electron gun power supply 140 has a relatively large size, the electron gun power supply 140 is arranged in the front-rear direction of the accelerator 100 in embodiments of the present disclosure in order to avoid interference between the electron gun power supply 140 and other components in the accelerator 100, such as the magnetron 110 and the accelerating tube 120. In this way, the electron gun power supply 140 may not affect a normal installation of other components, and the accelerator 100 may not have a too large overall dimension.

According to embodiments of the present disclosure, the accelerator 100 further includes a head rack 180, which has a frame structure. The head rack 180 forms an outer contour of the accelerator 100, the external collimator 160 is arranged outside the head rack 180, and other components of the accelerator 100 are arranged inside the head rack 180. In embodiments of the present disclosure, the accelerating tube 120, the microwave system 130, the magnetron 110 and the electron gun power supply 140 are all arranged inside the frame structure and distributed in a length direction of the frame structure, that is, arranged in sequence in the front-rear direction of the accelerator 100 to determine a length of the head rack 180; the magnetic pulse transformer 170, the solid-state switch component 150 and the external collimator control unit 161 are all arranged inside the frame structure and distributed in a width direction of the frame structure, that is, arranged in sequence in the left-right direction of the accelerator 100 to determine a width of the head rack 180; and the remaining components such as the gas filling system may be arranged in a remaining space in the frame structure of the head rack 180. Therefore, the overall dimension including the length and the width of the head rack 180 may be limited and the space inside the head rack 180 may be fully utilized while ensuring that the accelerator 100 may achieve a small focus. In addition, it is possible to change the overall dimension of the head rack 180 by appropriately reducing the sizes of components such as the four-port circulator and the solid-state switch component 150, so as to meet miniaturization requirements of the accelerator 100.

The X-band small-focus accelerator for non-destructive testing according to embodiments of the present disclosure has at least one of the following technical effects.
(1) The accelerating tube 120 is an X-band accelerating tube 120. The use of the X-band accelerating tube 120 may reduce the volume and weight of the accelerating tube 120 and its shielding while achieving a small focus, thereby reducing the overall dimension of the accelerator 100 and meeting the miniaturization requirements of the accelerator 100.
(2) The accelerating tube 120, the waveguide, the four-port circulator, the magnetron 110 and the electron gun power supply 140 are arranged in sequence in the front-rear direction of the accelerator 100 to determine the length of the accelerator 100; the magnetic pulse transformer 170, the solid-state switch component 150 and the external collimator control unit 161 are arranged in sequence in the left-right direction of the accelerator 100 to determine the width of the accelerator 100; the remaining components of the accelerator 100 are arranged in the gap of the head rack 180, so that the space in the accelerator 100 may be fully utilized.
(3) Through the miniaturization design of the four-port circulator and the solid-state switch component 150, the length and width of the accelerator 100 may be reduced, so that the accelerator 100 has a smaller overall dimension. Further, the high and low voltages of the electron gun power supply 140 are integrated, so that the structure of the accelerator 100 is more compact to be suitable for some special working conditions.

Some embodiments are illustrated and described according to the overall technical concept of the present disclosure. However, those skilled in the art may appreciate that changes may be made to these embodiments without departing from the principle and spirit of the overall technical concept of the present disclosure, and the scope of the present disclosure is defined by the claims and their equivalents.

## Claims

1. An X-band small-focus accelerator for non-destructive testing, comprising:
a magnetron configured to generate microwaves;
an accelerating tube configured to accelerate electrons, wherein the accelerating tube is an X-band accelerating tube;
a microwave system connected between the magnetron and the accelerating tube, and configured to feed the microwaves generated by the magnetron into the accelerating tube;
an electron gun connected to the accelerating tube, and configured to emit an electron beam into the accelerating tube; and
an electron gun power supply configured to supply power to the electron gun,
wherein the accelerating tube, the microwave system, the magnetron and the electron gun power supply are arranged in sequence in a front-rear direction of the accelerator to determine a length of the accelerator.

2. The X-band small-focus accelerator for non-destructive testing according to claim 1, wherein the microwave system comprises a waveguide configured to transmit microwave power and a circulator configured to isolate microwave power fed back to the magnetron.

3. The X-band small-focus accelerator for non-destructive testing according to claim 2, wherein the waveguide comprises a gas-filled straight waveguide and a gas-filled bending waveguide, the gas-filled straight waveguide is connected between the magnetron and the circulator, and the gas-filled bending waveguide is connected between the circulator and the accelerating tube.

4. The X-band small-focus accelerator for non-destructive testing according to claim 2, wherein the circulator comprises a four-port circulator arranged in the front-rear direction of the accelerator.

5. The X-band small-focus accelerator for non-destructive testing according to claim 1, wherein the accelerator further comprises a solid-state switch component configured to convert an input direct-current high voltage into a pulse high voltage, the solid-state switch component is connected to the magnetron, and the magnetron is configured to receive the pulse high voltage of the solid-state switch component to generate the microwaves.

6. The X-band small-focus accelerator for non-destructive testing according to claim 5, wherein when the accelerator is installed, the solid-state switch component is located at a bottom of the magnetron.

7. The X-band small-focus accelerator for non-destructive testing according to claim 5, wherein the accelerator further comprises an external collimator and an external collimator control unit, and when the accelerator is installed, the external collimator control unit is located at a bottom of the magnetron.

8. The X-band small-focus accelerator for non-destructive testing according to claim 7, wherein the accelerator further comprises a magnetic pulse transformer connected to the solid-state switch component and the magnetron, and
wherein the magnetic pulse transformer, the solid-state switch component and the external collimator control unit are arranged in sequence in a left-right direction of the accelerator to determine a width of the accelerator.

9. The X-band small-focus accelerator for non-destructive testing according to claim 8, wherein the accelerator further comprises a head rack having a frame structure, the accelerating tube, the microwave system, the magnetron and the electron gun power supply are arranged inside the frame structure and distributed in a length direction of the frame structure, and the magnetic pulse transformer, the solid-state switch component and the external collimator control unit are arranged inside the frame structure and distributed in a width direction of the frame structure.

10. The X-band small-focus accelerator for non-destructive testing according to claim 1, wherein the electron gun power supply comprises an electron gun low-voltage power supply and an electron gun high-voltage power supply.
